# EUROPEAN PATENT SPECIFICATION

(11) **EP 2 945 840 B1**
(45) Date of publication and mention of the grant of the patent: **21.09.2016**
(21) Application number: 14704899.5
(22) Date of filing: 14.01.2014
(51) Int. Cl.: B62K 5/007, B62K 15/00

(54) **ELECTRIC FOLDABLE AND PORTABLE FOUR- WHEELED VEHICLE**
ZUSAMMENKLAPPBARES UND TRAGBARES VIERRADELEKTROFAHRZEUG
VÉHICULE À QUATRE ROUES ÉLECTRIQUE PORTATIF ET REPLIABLE

(30) Priority: 18.01.2013 IT GO20130001
(43) Date of publication of application: 25.11.2015
(73) Proprietor: Stauber S.r.l. Unipersonale, 33048 San Giovanni al Natisone (Udine) (IT)
(72) Inventor: SCROPETTA, Lucio, I-33048 San Giovanni al Natisone (Udine) (IT)
(74) Representative: Lissandrini, Marco
(86) International application number: PCT/IB2014/058261
(87) International publication number: WO 2014/111848

(56) References cited:
- WO-A1-2009/135317
- WO-A2-03/037678
- GB-A- 2 385 038
- US-A1- 2007 107 954

## Description

### Technical field

The system according to this invention relates to an electric four-wheeled vehicle which is easily portable and can be used on grassy ground, dirt tracks or paved roads with the possibility of loading it with light goods/baggage.

### Background art

There is often a need for a small vehicle which is easily portable for on-road and off-road travel, if necessary also carrying small loads (such as goods for storage, work or gardening equipment or even sports kit, such as golf bags) in complete safety.

There are various vehicles also suitable for off-road travel (for example golf carts in the sports sector) but they are not portable.

In contrast, other easily portable vehicles are foldable electric three-wheelers.

The document WO03/037678 which is considered to be the closest prior art to the present invention discloses an electric foldable and portable four-wheeled vehicle having a load- bearing structure comprising a lower perimeter frame and an upper perimeter frame linked by means of at least two first bars and two second bars; said first bars being located in the front part of the four-wheeled vehicle and said second bars being located in the rear part; the lower ends of the first front bars being pivoted onto the side bars of the slower perimeter frame by means of pins; the upper ends of the first front bars being pivoted onto the side bars of the upper perimeter frame by means of pins.

Such vehicles are foldable and portable but they must be fitted out with bulky accessories in order to be able to transport objects. Other off-road vehicles such as motorcycles, although portable, require the rider to have a suitable level of ability. Also, transporting objects is very problematic with them.

Vehicles suitable for off-road use also include the quad-bike, or quad, which is a particularly agile vehicle, compact and strong, built for use on rough terrain. Although it may be defined as a four-wheeled motorcycle, in reality it is different from any other means of transport in terms of way it is driven, its versatility and construction. But even existing quadbikes are heavy and can only be transported on trailers or vehicles designed to transport materials.

### Disclosure of the Invention

This invention has for an aim to provide a four-wheeled vehicle which overcomes the above-mentioned disadvantages.

These and other aims are achieved by the four-wheeled vehicle according to this invention, having a load-bearing structure comprising a lower perimeter frame joined to an upper perimeter frame by at least two first bars and two second bars, where such bars are made of metal or special fibres such as carbon fibres.

The lower perimeter frame is formed by section bars preferably made of metal or of special fibres such as carbon fibres, which are joined together. Some of said section bars may be joined together to form a small front frame connected to the remaining section bars of the lower perimeter frame.

The upper perimeter frame is formed by at least one first side bar and one second side bar. These bars are also preferably made of metal alloy or of special fibres such as carbon fibres. Each of the two side bars is equipped with at least one rail whose longitudinal axis is parallel to the longitudinal median axis of the side bar itself. Alternatively, each of the two side bars is equipped with at least one recess or guide whose longitudinal axis is parallel to the longitudinal median axis of the side bar itself.

As already indicated, two first bars and two second bars join the lower perimeter frame to the upper perimeter frame. The first bars are at the front of the four-wheeled vehicle and the two second bars are at the rear of it.

The lower ends of the two first front bars are pivoted onto the side bars of the lower perimeter frame by means of pins. The upper ends of the two fi rst front bars are pivoted onto the side bars of the upper perimeter frame by means of pins.

A plate is fastened to at least one side bar of the lower perimeter frame, on each side of the vehicle. Each plate comprises a semi-circular slit with enlarged ends. The lower ends of the two second rear bars are pivoted onto said plates by means of pins.

The upper ends of the two second rear bars are pivoted onto the side bars of the upper perimeter frame by means of locking pins. Each locking pin is housed in a hole made in a block. Each block has at least a recess or guide which houses the rail of each of the side bars. Alternatively, each block is equipped with a rail segment sliding in the recess or guide made in each side bar of the upper perimeter frame.

A second pin is secured to the middle-upper part of each second rear bar and a third pin is secured to the middle-lower part. The third pin of each second rear bar is free to slide in the slit made in one of the above-mentioned plates and is housed in one of its enlarged ends. The third pin is equipped with a lever fixed to an eccentric which locks each second rear bar to the plate.

Two third side bars link the side bars of the lower perimeter frame to the second rear bars. The front end of each third side bar is pivoted onto the front end of the lower perimeter frame.

Each third side bar comprises a slit extending along the longitudinal median axis of the third side bar itself. Each third side bar is pivoted onto each second rear bar by means of the above-mentioned second pin located in the middle-upper part of each second rear bar. Each second pin is housed in the above-mentioned slit in the third side bar. Alternatively, the third side bars can connect the rear end of the lower perimeter frame to the first front bars.

An axle is connected to the front part of the lower perimeter frame. Two hubs are fastened to the two ends of the axle and two front wheels are mounted on said hubs.

A fork made up of two rear bars and at least a traverse bar linking the rear bars is pivoted onto the rear ends of the side bars of the lower perimeter frame. The fork is pivoted onto the lower perimeter frame by means of pins.

A shaft, which is free to rotate on the fork, is constrained near the rear ends of fork. Two hubs are fastened to the two ends of the shaft and two rear wheels are mounted on said hubs. A brake disk with attached brake caliper fastened to the fork is also fastened on the shaft.

An electric motor powered by electric accumulators is installed on the fork. The latter transmits motion to the rear wheels by means of a motion transmitting element connected to a gear wheel keyed onto the shaft, or by means of a differential mechanical drive system connected directly to the motor. Said differential system may also be positioned on the front part of the fork, and in that case transmission of motion to the rear wheels by the differential system may also occur independently by means of shafts with gears connected separately to the wheels.

Another alternative involves the use of two motors, each of which is connected separately to the hub of a rear wheel.

A joint connecting the two hubs of the front wheels to the axle of the handlebar by means of tension rods is pivoted onto the lower perimeter frame. The axle of the handlebar is housed in a sleeve pivoted onto the lower perimeter frame by means of pins.

The handlebar is equipped with brake and accelerator control levers.

The sleeve is linked to the side bars of the upper perimeter frame by means of two semi-cylindrical brackets which form a cylindrical cavity housing the sleeve.

Said semi-cylindrical brackets house two pins fastening the sleeve to the side bars of the upper perimeter frame. The four-wheeled vehicle according to the invention is completed by a saddle and a receptacle to hold small objects which are fastened to the upper perimeter frame and an electric accumulators supporting tray supported by the lower perimeter frame. Between the lower perimeter frame and the upper perimeter frame there is a space which houses a container to hold objects. The latter is provisionally fastened to the lower frame and on the side on side bars by retaining elements which may or may not be elastic.

Shock absorber systems may be connected to the hubs of the wheels or to the axle or to the shaft which supports them or to other parts of the lower perimeter frame or of the fork.

The four-wheeled vehicle according to the invention is easily portable - for example - in a medium-sized motor vehicle or a camper or a boat - both because it is light and because of its reduced dimensions and the fact that it is foldable.

Its lightness derives from the fact that it is made of aluminium alloys, stainless steel or special fibres such as carbon fibres, also guaranteeing that it will not rust in any weather. Therefore, it can be left outside without problems.

The fact that the four-wheeled vehicle is foldable means that it is portable using practically any means of transport.

Therefore, the four-wheeled vehicle according to the invention is an easy to ride, light single-seat means of transport which is versatile and can be used without harming the environment at any time and in any place. In fact, it is easy to use on grassy ground, dirt tracks or paved roads with the possibility of loading it with light goods/baggage. The four-wheeled vehicle is fast and stable enough, with good travel autonomy, having a simple and attractive look. Therefore, it can be driven by any person in any situation, irrespective of driver skill, since it has four wheels and does not require any special effort to balance it. It is non-polluting, since it uses an electric motor.

The container to hold objects housed in the space between the upper fame and the lower frame may hold, for example, light baggage, goods, growing, gardening or repair tools, items relating to sports, leisure, relaxation and many others.

### Brief Description of the Drawings

The features of this invention are fully described in the description of a preferred, non-limiting embodiment of the four-wheeled vehicle according to the invention, illustrated by way of general example in the accompanying drawings, in which:
- Figure 1 is a perspective view of the four-wheeled vehicle;

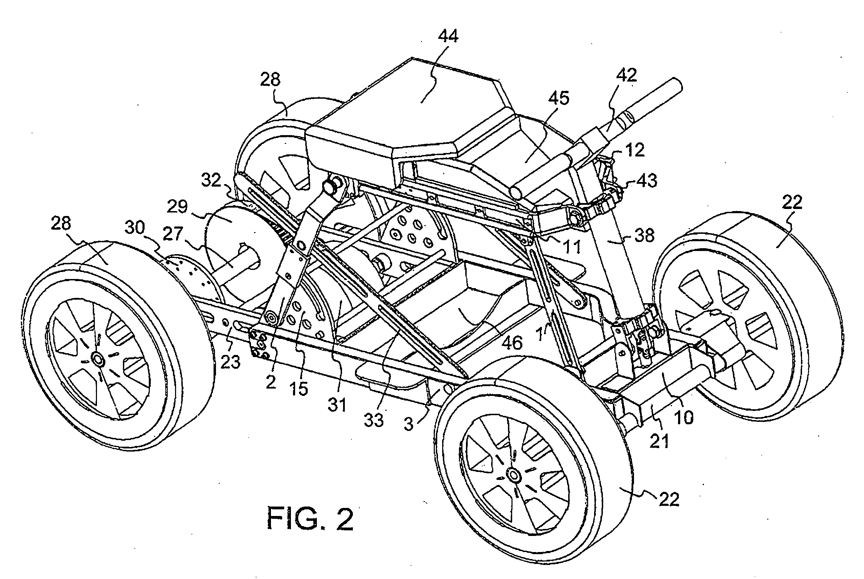

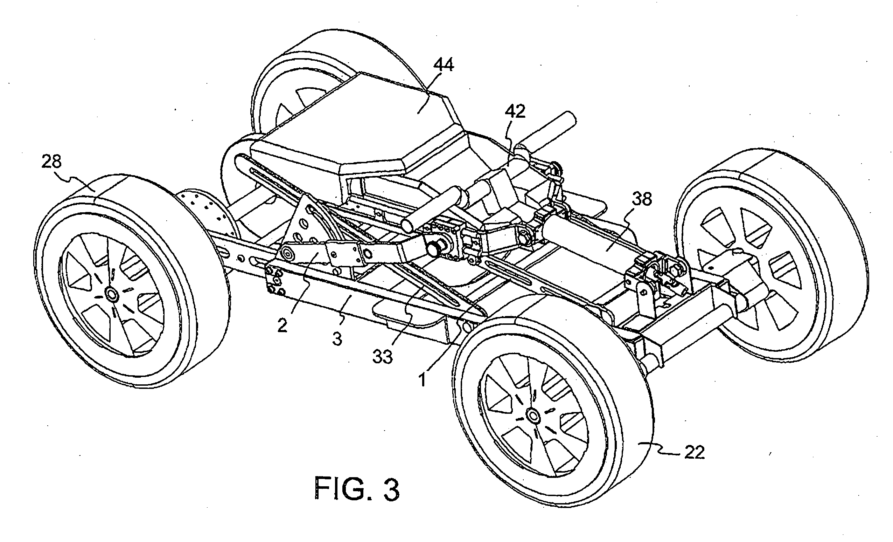

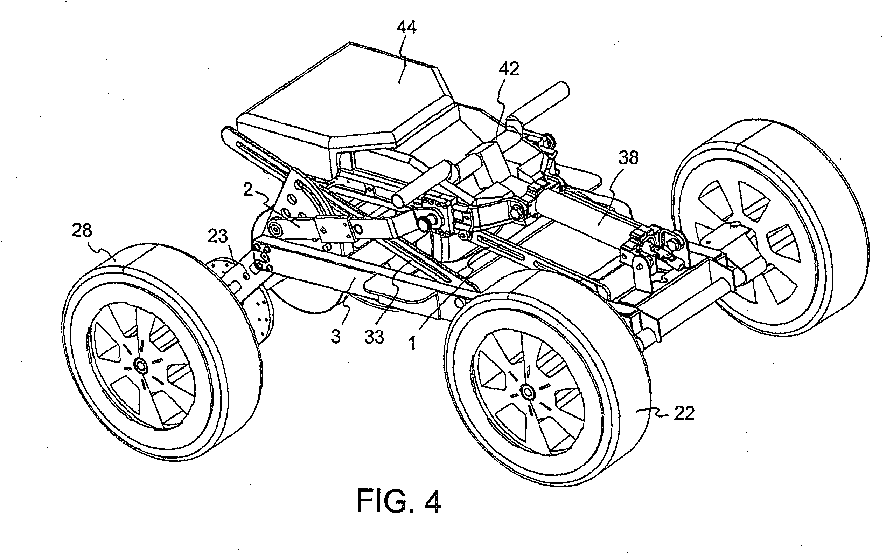

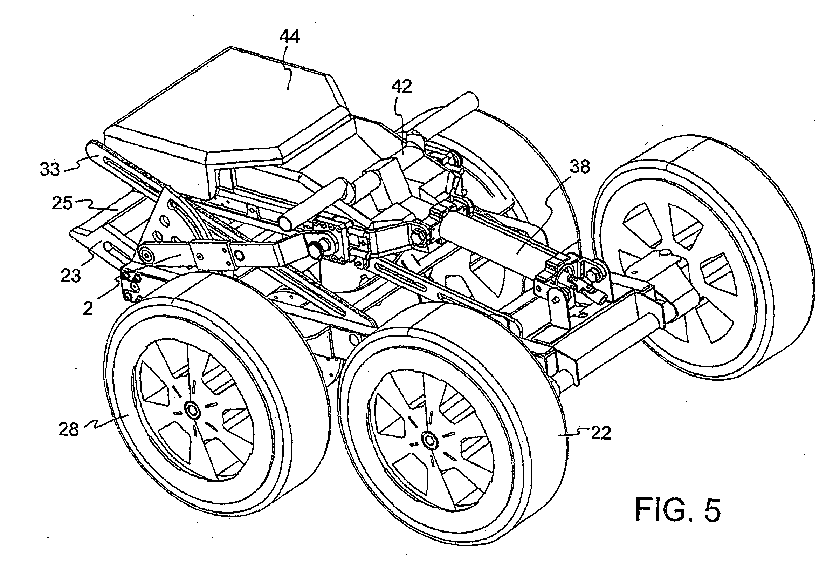

- Figures 2 to 5 show the same vehicle at various steps of folding;

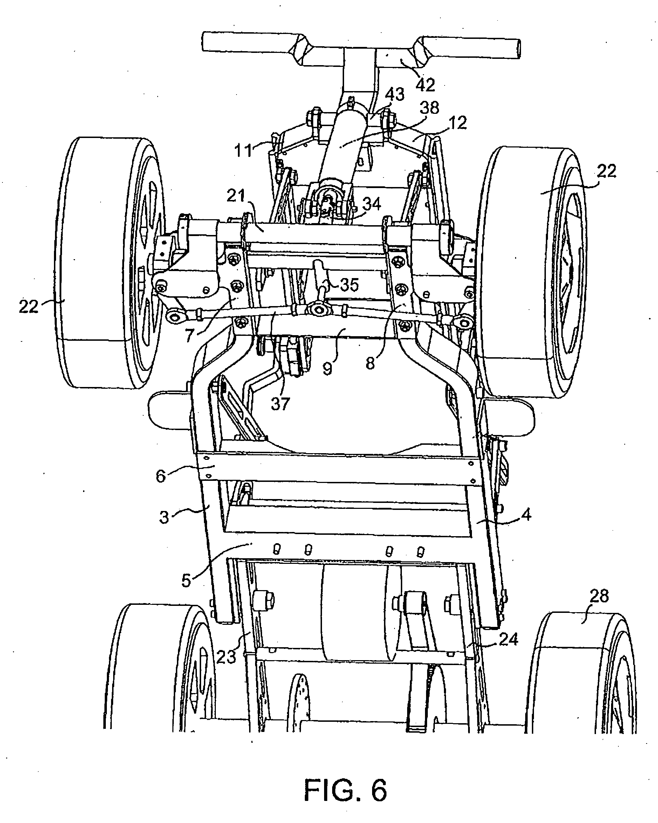

- Figure 6 is a bottom perspective view of the vehicle;

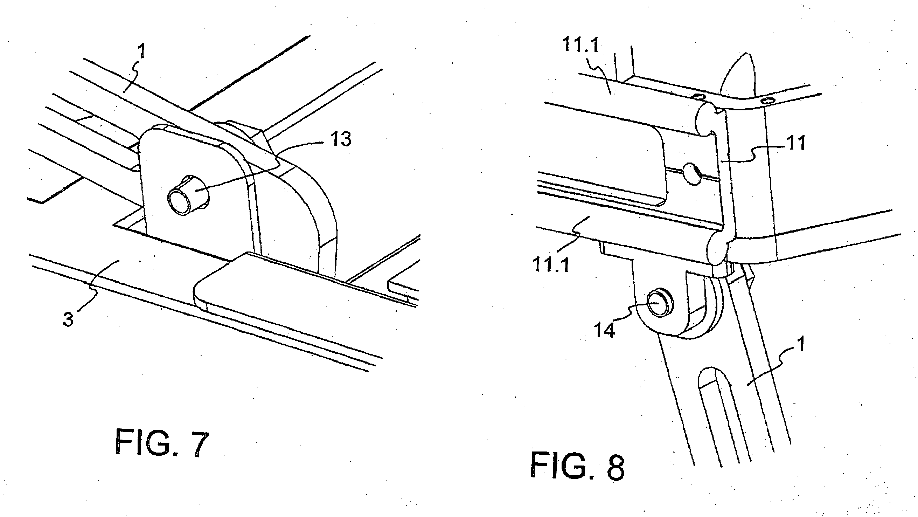

- Figure 7 is a more detailed perspective view of the connecting zone between a first front bar and the lower perimeter frame;
- Figure 8 is a more detailed perspective view of the connecting zone between a first front bar and the upper perimeter frame;

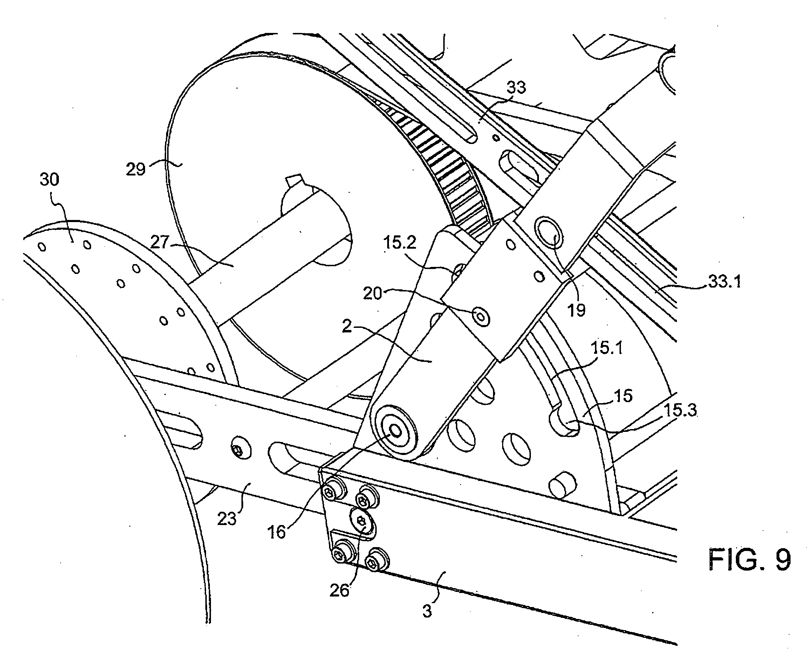

- Figure 9 is a more detailed perspective view of the connecting zone between a second rear bar and the lower perimeter frame;

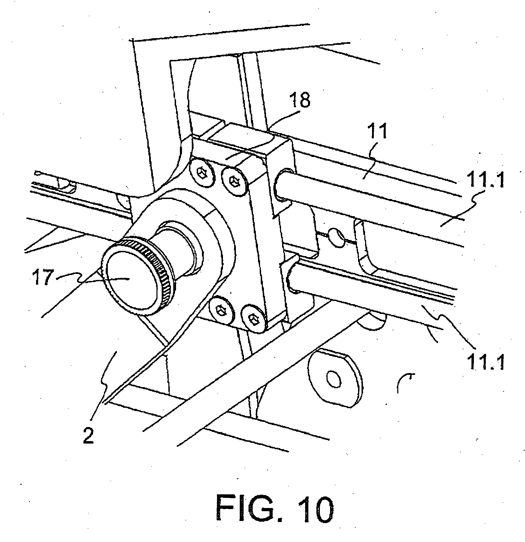

- Figure 10 is a more detailed perspective view of the connecting zone between a second rear bar and the upper perimeter frame;

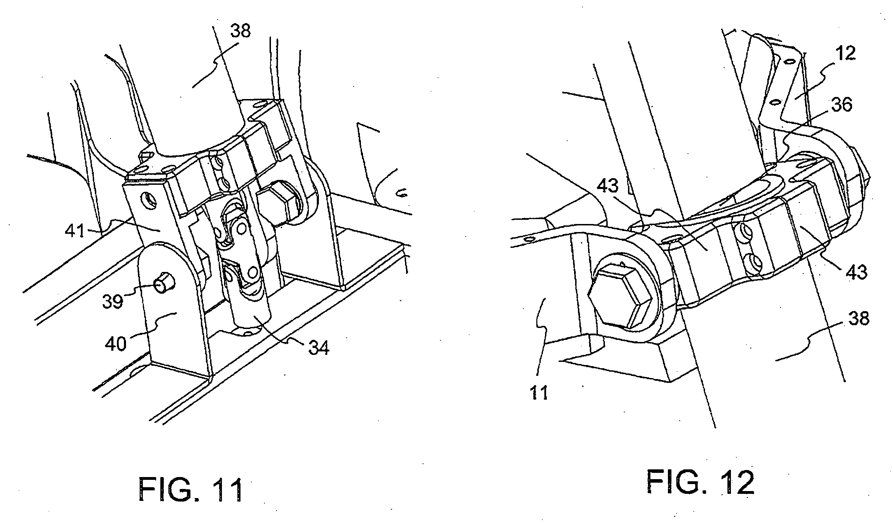

- Figure 11 is a more detailed perspective view of the connecting zone between the sleeve and a small front frame;
- Figure 12 is a more detailed perspective view of the connecting zone between the sleeve and the upper perimeter frame.

### Detailed description of the preferred embodiments of the invention

The four-wheeled vehicle according to this invention has a load-bearing structure comprising a lower perimeter frame joined to an upper perimeter frame by two first bars 1 and two second bars 2 made of aluminium alloy and stainless steel.

The lower perimeter frame is formed by a fi rst side bar 3, a second side bar 4, a rear bar 5, a middle bar 6 and a small front frame. The latter in turn is formed by a fi rst side bar 7, a second side bar 8, a rear bar 9 and a front bar 10. The two side bars 3, 4 of the lower perimeter frame are joined together at the front by the small front frame, centrally by the middle bar 6 and at the rear by the rear bar 5 to form a quadrilateral. The side bars 3, 4 are box-section section bars made of aluminium alloy, whilst the bar 5 has an "L"-shaped profile.

The upper perimeter frame is formed by a first side bar 11 and a second side bar 12. The two side bars 11, 12 are bent into a Z shape at the front. The front ends of the side bars 11, 12 of the upper perimeter frame are pierced. The side bars 11, 12 are also made of aluminium alloy.

Each of the two side bars 11, 12 of the upper perimeter frame has two peripheral cylindrical branches 11.1 whose longitudinal axis is parallel to the longitudinal median axis of the side bar 11, 12 itself.

As already indicated, two first bars 1 and two second bars 2 join the lower perimeter frame to the upper perimeter frame. The first bars 1 are at the front of the four-wheeled vehicle and the two second bars 2 are at the rear of it.

The lower ends of the two fi rst front bars 1 are pivoted onto the side bars 3, 4 of the lower perimeter frame by means of pins 13. The upper ends of the fi rst front bars 1 are pivoted onto the side bars 11, 11 of the upper perimeter frame by means of pins 14.

A plate 15 roughly having the shape of a quarter of a circle is fastened to each side bar 3, 4 of the lower frame. Each plate 15 has a peripheral semi-circular slit 15.1 with an upper end 15.2 and a lower end 15.3, both enlarged. The lower ends of the two second rear bars 2 are pivoted onto the plates 15 by means of pins 16.

The upper ends of the two second rear bars 2 are pivoted onto the side bars 11, 12 of the upper perimeter frame by means of locking pins 17.

Each locking pin 17 is housed in a hole made in a block 18.

The block 18 comprises two through recesses or guides which engage on two peripheral cylindrical branches 11.1 of each of the side bars 11, 12.

A further pin 19 is secured to the middle-upper part of each second rear bar 2. A third pin 20 is secured to the middle-lower part of each second rear bar 2 and is free to slide in the slit 15.1 made at the periphery of each plate 15. Each third pin 20 has a lever fixed to an eccentric.

An axle 21 is connected to the front of the small front frame. Two hubs are fastened to the two ends of the axle 21 and two front wheels 22 are mounted on said hubs.

A fork made up of two rear bars 23, 24 and a traverse bar 25 linking the rear bars is pivoted onto the rear ends of the side bars 3, 4 of the lower perimeter frame. The fork is pivoted onto the lower perimeter frame by means of pins 26 housed in the rear ends of the side bars 3, 4.

A shaft 27, which is free to rotate, is constrained near the rear ends of the rear bars 23, 24 of the fork. Two hubs are fastened to the two ends of the shaft 27 and two rear wheels 28 are mounted on said hubs. A gear wheel 29 and a brake disk 30 with attached brake caliper fastened to the fork are also keyed onto the shaft 27. An electric motor 31 is installed on the fork.

The latter is connected to the gear wheel 29 by a toothed belt 32 and that connection allows rotation of the driving shaft 27 and of the rear wheels 28 engaging with it.

Two third side bars 33 link the side bars 3, 4 of the lower perimeter frame to the second rear bars 2. Each third side bar 33 has a central slit 33.1 extending along the longitudinal median axis of the side bar 33 itself. The front end of each third side bar 33 is pivoted onto the front end of each side bar 3, 4 of the lower perimeter frame. Each third side bar 33 is pivoted onto each second rear bar 2 by means of the above-mentioned pin 19 located in the middle-upper part of each second rear bar 2.
Each pin 19 is housed in the slit 33.1 of a third side bar 33.

A joint 34 connecting a lower axle 35 to the axle 36 of the handlebar is fastened to the small front frame. The axle 35 is connected to the two hubs of the front wheels 22 by tension rods 37. The axle 36 of the handlebar is housed in a sleeve 38 pivoted onto the small front frame by means of pins 39 housed in holes made in brackets 40 fastened to the small front frame and brackets 41 fastened to the base of the sleeve 38. The handlebar 42 is equipped with brake and accelerator control levers. The sleeve 38 is linked to the side bars 11, 12 of the upper perimeter frame by means of two semi-cylindrical brackets 43 which form a cylindrical cavity housing the sleeve 38. Fixed on said semi-cylindrical brackets 43 there are two pins which pass through the holes in the front ends of the side bars 11, 12 of the upper perimeter frame.

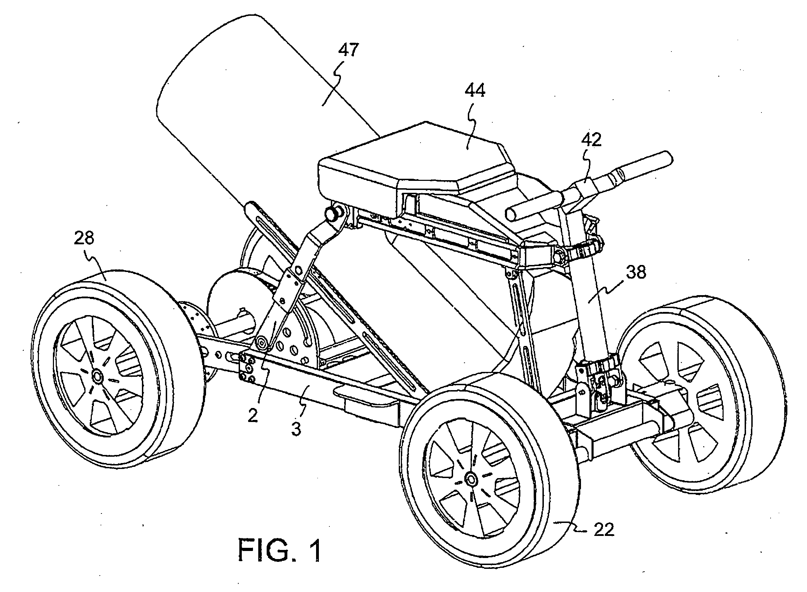

The four-wheeled vehicle according to the invention is completed by a saddle 44 and a receptacle to hold small objects 45 which are fastened to the upper perimeter frame and an electric accumulators supporting tray 46 supported by the lower perimeter frame. Between the upper frame and the lower frame there is a space which houses a container to hold objects 47. The container 47, shown having a cylindrical shape in Figure 1, is provisionally fastened to the lower frame and on the side on side bars 33 by means of elastic belts. The container 47 may, for example, also be a golf bag for holding golf clubs.

When the vehicle is set up for use the two locking pins 17 located at the upper ends of the two second rear bars 2 are tightened in the holes of the blocks 18 and prevent a movement of the locking position of the blocks 18 on the side bars 11, 12 caused by transversal forces. The third pins 20 are housed in the enlarged upper ends 15.2 of the plates 15. The eccentrics of the levers with which the third pins 20 are equipped lock the second rear bars 2 to the plates 15.

When the four-wheeled vehicle needs to be transported it can be folded.

First, the container 47 is taken out, freeing it from the elastic belts.

Then the two locking pins 17 located at the upper ends of the two second rear bars 2 are rotated through 90°. In that way, the blocks 18 are no longer tightened in the side bars 11, 12. Therefore, the blocks 18 can slide towards the front part of the four-wheeled vehicle on the two peripheral cylindrical branches 11.1 of each of the side bars 11,12.

At the same time, each pin 19 located at the middle-upper part of each second rear bar 2 slides in the slit 33.1 of a third side bar 33, also towards the front part of the four-wheeled vehicle.

Each third pin 20, fastened to each second rear bar 2 in the middle-lower position, is also freed, rotating it and freeing its eccentric from the engagement with the plate 15. Each third pin 20 can therefore slide in the slit 15.1 made at the periphery of each plate 15, also towards the front part of the four-wheeled vehicle. Each third pin 20, when it arrives at its end of stroke, is housed in the lower end 15.3 of the slit 15.1. Each third pin 20 is tightened again, forcing it to remain in this seat.

Also simultaneously, the sleeve 38, the axle 36 of the handlebar and the handlebar 42 are rotated thanks to the pins 39 housed in the brackets 40 fastened to the small front frame and in the brackets 41 fastened to the base of the sleeve 38.

Said folding operations significantly reduce the height of the four-wheeled vehicle. For example, it may have a length of 100 cm, a width of 80 cm and a height of 55 cm, once it has been folded and the wheels removed.

When the lower perimeter frame is as close as possible to the upper perimeter frame, and when the sleeve 38, the axle 36 of the handlebar and the handle bar 42 have been lowered, the fork pivoted onto the rear ends of the side bars 3, 4 of the lower perimeter frame is rotated. The fork rotates on the pins 26 and its movement pulls the parts connected to it: the shaft 27, the two rear wheels 28, the gear wheel 29, the brake disk 30, the toothed belt 32 and the electric motor 31. The result of total folding of the fork is a significant reduction in the length of the four-wheeled vehicle.

The four-wheeled vehicle according to the invention may be modified and adapted in several ways without thereby departing from the scope of the inventive concept as claimed.

## Claims

1. An electric foldable and portable four-wheeled vehicle having a handlebar (42) equipped with brake and accelerator control levers, a saddle (44), a receptacle to hold small objects (45) and an electric accumulators supporting tray (46), wherein its load-bearing structure comprises a lower perimeter frame and an upper perimeter frame linked by means of at least two first bars (1) and two second bars (2); said frames and said first and second bars (1, 2) being made of metal or special fibres such as carbon fibres; said lower perimeter frame being formed by section bars connected to each other; said upper perimeter frame being formed by at least a first side bar (11) and a second side bar (12); each side bar (11, 12) of the upper perimeter frame is equipped with at least one rail; the longitudinal axis of each rail being parallel to the longitudinal median axis of the side bar (11, 12); said first bars (1) being located in the front part of the four-wheeled vehicle and said second
bars (2) being located in the rear part; the lower ends of the first front bars (1) being pivoted onto the side bars (3, 4) of the lower perimeter frame by means of pins (13 ; the upper ends of the first front bars (1) being pivoted onto the side bars (11, 12) of the upper perimeter frame by means of pins (14); a plate (15) being fastened to each side of the lower perimeter frame; a semi-circular slit (15.1) being placed in the peripheral area of each plate (15), each semi-circular slit (15.1) having an enlarged upper end (15.2) and an enlarged lower end (15.3); the lower ends of the second rear bars (2) being pivoted onto said plates (15) by means of pins (16); the upper ends of said second rear bars (2) being pivoted onto said side bars (11, 12) of the upper perimeter frame by means of locking pins (17); each locking pin (17) being housed in a hole made in a block (18); each block (18) having at least a recess or guide engaging with one rail of a side bar (11, 12) of the upper perimeter frame; a second pin (19) being secured to the middle-upper part of each second rear bar (2) and a third pin (20) being secured to the middle-lower part of each second rear bar (2); said third pin (20) of each second rear bar (2) being free to slide in the slit (15.1) of each plate (15) and being housed in one of its enlarged ends (15.2, 15.3); each third pin (20) being equipped with a lever fixed to an eccentric locking each second rear bar (2) to the plate (15); two third side bars (33) linking the side bars (3, 4) of the lower perimeter frame to the second rear bars (2); the front end of each third side bar (33) being pivoted onto the front end of the lower perimeter frame; each third side bar (33) having a slit (33.1) extending along the longitudinal median axis of the side bar (33) itself; each third side bar (33) being pivoted onto each second rear bar (2) by means of said second pin (19) located in the middle-upper part of each second rear bar (2) itself; each second pin (19) of the second rear bar (2) being housed in said slit (33.1) of a third side bar (33); an axle (21) being connected to the front part of the lower perimeter frame; two hubs being fastened to the two ends of the axle (21) itself and two front wheels (22) being mounted onto said hubs; a joint (34) connecting the two hubs of the front wheels (22) to the axle (36) of the handlebar by means of tension rods (37) is fastened to the lower perimeter frame; said axle (36) of the handlebar being housed in a sleeve (38) pivoted onto the lower perimeter frame by means of pins (39); said sleeve (38) being linked to the side bars (11, 12) of the upper perimeter frame by means of two semi-cylindrical brackets (43) which form a cylindrical cavity housing the sleeve (38); said semi-cylindrical brackets (43) housing pins fastening the sleeve (38) to the side bars (11, 12) of the upper perimeter frame itself; a fork made up of two rear bars (23, 24) and at least a traverse bar (25) linking the rear bars (23, 24) themselves being pivoted onto the rear ends of the side bars (3, 4) of the lower perimeter frame; said fork being pivoted onto the lower perimeter frame by means of pins (26); a shaft (27), which is free to rotate on the fork, being constrained near the rear ends of the rear bars (23, 24) of the fork itself; two hubs onto which two rear wheels (28) are mounted being fastened to the two ends of said shaft (27); a brake disk (30) with attached brake caliper fastened to the fork also being keyed onto said shaft (27); an electric motor (31) powered by the electric accumulators located in the electric accumulators supporting tray (46) being installed on said fork; said electric motor (31) driving the rear wheels (28); said saddle (44) and said receptacle to hold small objects (45) being fastened to the upper perimeter frame; said electric accumulators supporting tray (46) being sustained by the lower perimeter frame; a space being located between the lower perimeter frame and the upper perimeter frame; a container to hold objects (47) being housed within said space; said container to hold objects (47) being provisionally fastened to the lower perimeter frame and on the side on side bars (33) by retaining elements which may or may not be elastic.

2. The four-wheeled vehicle according to claim 1, **characterized in that** said lower perimeter frame is formed by a first side bar (3), a second side bar (4), a. rear bar (5) and a middle bar (6) as well as a small front frame.

3. The four-wheeled vehicle according to claim 2, **characterized in that** said small front frame is fastened to the lower perimeter frame and is formed by a first side bar (7), a second side bar (8), a rear bar (9) and a front bar (10).

4. The four-wheeled vehicle according to claim 1, **characterized in that** said side bars (11, 12) forming the upper perimeter frame are bent at the front so that their ends can get close to each other.

5. The four-wheeled vehicle according to claim 1, **characterized in that** said rail of each side bar (11, 12) of the upper perimeter frame is a cylindrical branch (11.1).

6. The four-wheeled vehicle according to claim 1, **characterized in that** each of the two side bars (11, 12) of the upper perimeter frame is equipped with at least a recess or guide whose longitudinal axis is parallel to the longitudinal median axis of the side bar (11, 12) itself.

7. The four-wheeled vehicle according to claims 1 and 6, **characterized in that** each block (18) is equipped with at least one rail segment sliding in the recess or guide made in each side bar (11, 12) of the upper perimeter frame.

8. The four-wheeled vehicle according to claim 1, **characterized in that** third side bars (33) can connect the rear end of the lower perimeter frame to the first front bars (1).

9. The four-wheeled vehicle according to claims 1 and 2, **characterized in that** said pins (39) pivoting said sleeve (38) onto the lower perimeter frame are housed in holes made in brackets (40) fastened to the small front frame and brackets (41) fastened to the base of the sleeve (38).

10. The four-wheeled vehicle according to claim 1, **characterized in that** the motion is transmitted by the electric motor (31) to the rear wheels (28) by means of a motion-transmitting element connected to a gear wheel (29) keyed onto said shaft (27).

11. The four-wheeled vehicle according to claim 1, **characterized in that** the motion is transmitted by the electric motor (31) to the rear wheels (28) by means of a differential mechanical drive system.

12. The four-wheeled vehicle according to claims 1 and 11, **characterized in that** said differential mechanical drive system can transmit the motion independently to each rear wheel (28) by means of shafts with gears connected separately to the rear wheels (28) themselves.

13. The four-wheeled vehicle according to claim 1, **characterized in that** it uses two motors (31), each of which is connected separately to the hub of one rear wheel (28).

14. The four-wheeled vehicle according to claim 1, **characterized in that** it is equipped with shock absorber systems.

## Patentansprüche

1. Zusammenklappbares und tragbares Vierradelektrofahrzeug, aufweisend eine Lenkstange (42), ausgestattet mit Bedienhebeln für Bremse und Beschleunigung, einen Sattel (44), einen Behälter zur Halterung kleiner Gegenstände (45) und einer Trageablage (46) für elektrische Akkus, wobei die lasttragende Konstruktion einen unteren Umfangsrahmen und einen oberen Umfangsrahmen umfasst, verbunden mittels mindestens zweier erster Stangen (1) und zweier zweiter Stangen (2), wobei die Rahmen und die ersten und zweiten Stangen (1, 2) aus Metall oder Spezialfasern wie Kohlestofffasern bestehen, wobei der untere Umfangsrahmen durch Profilstangen gebildet ist, die miteinander verbunden sind, wobei der obere Umfangsrahmen durch mindestens eine erste Seitenstange (11) und eine zweite Seitenstange (12) gebildet ist, wobei eine jede Seitenstange (11, 12) des oberen Umfangsrahmens mit mindestens einer Schiene ausgestattet ist, wobei die Längsachse einer jeden Schiene parallel zur Längsmittelachse der Seitenstange (11, 12) angeordnet ist, wobei die ersten Seitenstangen (1) im frontseitigen Teil des Vierradfahrzeugs befindlich sind und die zweiten Stangen (2) im rückseitigen Teil befindlich sind, wobei die unteren Enden der ersten frontseitigen Stangen (1) schwenkbar auf den Seitenstangen (3, 4) des unteren Umfangsrahmens durch Zapfen (13) befestigt sind, wobei die oberen Enden der ersten frontseitigen Stangen (1) schwenkbar auf den Seitenstangen (11, 12) des oberen Umfangsrahmens durch Zapfen (14) befestigt sind; eine Platte (15), die an jeder Seite des unteren Umfangsrahmens befestigt ist; einen halbkreisförmigen Schlitz (15.1), der im umfangseitigen Bereich einer jeden Platte (15) platziert ist, wobei der halbkreisförmige Schlitz (15.1) ein verbreitertes oberes Ende (15.2) und ein verbreitertes unteres Ende (15.3) aufweist, wobei die unteren Enden der zweiten rückseitigen Stangen (2) schwenkbar auf den Platten (15) durch Zapfen (16) befestigt sind, wobei die oberen Enden der zweiten rückseitigen Stangen (2) schwenkbar auf den Seitenstangen (11, 12) des oberen Umfangsrahmens durch Verriegelungsstifte (17) befestigt sind, wobei ein jeder Verriegelungsstift (17) in einem in einem Block (18) ausgebildeten Loch untergebracht ist, wobei ein jeder Block (18) mindestens eine Vertiefung oder Führung aufweist, die mit einer Schiene der Seitenstange (11, 12) des oberen Umfangsrahmens in Eingriff gelangt, wobei ein zweiter Zapfen (19) am mittigen oberen Teil einer jeden zweiten rückseitigen Stange (2) befestigt ist und ein dritter Zapfen (20) am mittleren unteren Teil einer jeden zweiten rückseitigen Stange (2) befestigt ist, wobei der dritte Zapfen (20) einer jeden zweiten rückseitigen Stange (2) frei in den Schlitz (15.1) einer jeden Platte (15) gleiten kann und in einem deren verbreiterten Enden (15.2, 15.3) untergebracht ist; wobei ein jeder dritter Zapfen (20) mit einem Hebel ausgestattet ist, der an einem Exzenter fixiert ist, mit dem eine jede zweite rückseitige Stange (2) an der Platte (15) festgespannt wird, wobei zwei dritte Seitenstangen (33) die Seitenstangen (3, 4) des unteren Umfangsrahmens mit den zweiten rückseitigen Seitenstangen (2) verbinden, wobei das frontseitige Ende einer jeden dritten Seitenstange (33) schwenkbar auf dem frontseitigen Ende des unteren Umfangsrahmens befestigt ist; wobei eine jede dritte Seitenstange (33) einen Schlitz (33.1) aufweist, der sich entlang der Längsmittelachse der Seitenstange (33) erstreckt; wobei eine jede dritte Seitenstange (33) schwenkbar auf einer jeden zweiten rückseitigen Stange (2) mittels eines zweiten Zapfens (19) befestigt ist, befindlich im mittleren oberen Teil einer jeden zweiten rückseitigen Stange (2), wobei ein jeder zweiter Zapfen (19) der zweiten rückseitigen Stange (2) in diesem Schlitz (33.1) einer dritten Seitenstange (33) untergebracht ist; eine Achse (21), die mit dem frontseitigen Teil des unteren Umfangsrahmens verbunden ist; zwei Naben, die an den zwei Enden der Achse (21) und zwei Vorderrädern (22) befestigt ist, die auf den Naben montiert sind; ein Gelenk (34), das die zwei Naben der Vorderräder (22) mit der Achse (36) des Lenkers mittels Spannstangen (37) verbindet, ist am unteren Umfangsrahmen befestigt; wobei die Achse (36) des Lenkers in einer Hülse (38) untergebracht ist, die durch Zapfen (39) schwenkbar am unteren Umfangsrahmen befestigt ist; wobei die Hülse (38) mit den Seitenstangen (11, 12) des oberen Umfangsrahmens durch zwei halbzylindrische Bügel (43) verknüpft ist, die einen zylindrischen Hohlraum formen, in dem die Hülse (38) untergebracht ist; wobei diese halbzylindrischen Bügel (43) Zapfen beherbergen, mit denen die Hülse (38) an den Seitenstangen (11, 12) des oberen Umfangsrahmens befestigt ist; eine Gabel, bestehend aus zwei rückseitigen Seitenstangen (23, 24) und mindestens einer Querstange (25), die die rückseitigen Stangen (23, 24) miteinander verbindet, schwenkbar befestigt auf den rückseitigen Enden der Seitenstangen (3, 4) des unteren Umfangsrahmens; wobei die Gabel schwenkbar auf dem unteren Umfangsrahmen durch Zapfen (26) befestigt ist; eine Welle (27), die sich frei um die Gabel drehen kann, die in der Nähe der rückseitigen Enden der rückseitigen Stangen (23, 24) der Gabel festgespannt ist; zwei Naben, auf denen zwei Hinterräder (28) montiert sind, die an den zwei Enden der Welle (27) befestigt sind; eine Scheibenbremse (30) mit angebrachtem Bremssattel, befestigt an der Gabel, auch verkeilt auf die Welle (27); einen elektrischen Motor (31), der über die elektrischen Akkus versorgt wird, die sich in der Trageablage (46) für elektrische Akkus befinden, installiert auf der Gabel, wobei der elektrische Motor (31) die Hinterräder (28) antreibt; der Sattel (44) und der Behälter zur Halterung kleiner Gegenstände (45) sind am oberen Umfangsrahmen befestigt; die Trageablage für elektrische Akkus (46) wird vom unteren Umfangsrahmen gestützt; ein Bereich befindet sich zwischen dem unteren Umfangsrahmen und dem oberen Umfangsrahmen, ein Behälter zur Halterung von Gegenständen (47) ist in diesem Bereich untergebracht, wobei der Behälter zur Halterung von Gegenständen (47) provisorisch am unteren Umfangsrahmen und an der Seite an Seitenstangen (33) durch Halterungselemente befestigt ist, die elastisch sein können oder nicht.

2. Vierradfahrzeug nach Anspruch 1, **dadurch gekennzeichnet, dass** der untere Umfangsrahmen durch eine erste Seitenstange (3), eine zweite Seitenstange (4), eine rückseitige Stange (5) und eine mittlere Stange (6) sowie einen kleinen frontseitigen Rahmen gebildet ist.

3. Vierradfahrzeug nach Anspruch 2, **dadurch gekennzeichnet, dass** der kleine frontseitige Rahmen am unteren Umfangsrahmen befestigt ist und durch eine erste Seitenstange (7), eine zweite Seitentange (8), eine rückseitige Stange (9) und eine frontseitige Stange (10) geformt ist.

4. Vierradfahrzeug nach Anspruch 1, **dadurch gekennzeichnet, dass** die Seitenstangen (11, 12), die den oberen Umfangsrahmen bilden, an der Frontseite gebogen sind, sodass ihre Enden nahe aneinander geführt werden können.

5. Vierradfahrzeug nach Anspruch 1, **dadurch gekennzeichnet, dass** die Schiene einer jeden Seitenstange (11, 12) des oberen Umfangsrahmens ein zylindrischer Abschnitt (11.1) ist.

6. Vierradfahrzeug nach Anspruch 1, **dadurch gekennzeichnet, dass** eine jede der zwei Seitenstangen (11, 12) des oberen Umfangsrahmens mit mindestens einer Vertiefung oder Führung ausgestattet ist, deren Längsachse parallel zur Längsmittelachse der Seitenstange (11, 12) verläuft.

7. Vierradfahrzeug nach Anspruch 1 und 6, **dadurch gekennzeichnet, dass** ein jeder Block (18) mit mindestens einem Schienensegment ausgestattet ist, das in die in jeder Seitenstange (11, 12) des oberen Umfangsrahmens ausgebildete Vertiefung oder Führung gleitet.

8. Vierradfahrzeug nach Anspruch 1, **dadurch gekennzeichnet, dass** die dritten Seitenstangen (33) das rückseitige Ende des unteren Umfangsrahmens mit den ersten frontseitigen Stangen (1) verbinden können.

9. Vierradfahrzeug nach Anspruch 1 und 2, **dadurch gekennzeichnet, dass** die Zapfen (39), mit denen die Hülse (38) schwenkbar auf dem unteren Umfangsrahmen befestigt ist, in Löchern untergebracht sind, die in Bügeln (40) ausgebildet sind, befestigt am kleinen frontseitigen Rahmen, und Bügeln (41), befestigt an der Basis des Hülse (38).

10. Vierradfahrzeug nach Anspruch 1, **dadurch gekennzeichnet, dass** die Bewegung durch den elektrischen Motor (31) auf die Hinterräder (28) mittels eines bewegungsübertragenden Elements übertragen wird, das mit einem Zahnrad (29) verbunden ist, das auf der Welle (27) verkeilt ist.

11. Vierradfahrzeug nach Anspruch 1, **dadurch gekennzeichnet, dass** die Bewegung durch den elektrischen Motor (31) auf die Hinterräder (28) mittels eines mechanischen Differenzialantriebssystems übertragen wird.

12. Vierradfahrzeug nach Anspruch 1 und 11, **dadurch gekennzeichnet, dass** das mechanische Differenzialantriebssystem die Bewegung unabhängig auf jedes Hinterrad (28) mithilfe von Wellen mit Zahnrädern übertragen kann, die separat mit den Hinterrädern (28) verbunden sind.

13. Vierradfahrzeug nach Anspruch 1, **dadurch gekennzeichnet, dass** es zwei Motoren (31) nutzt, von denen ein jeder separat mit der Nabe eines Hinterrads (28) verbunden ist.

14. Vierradfahrzeug nach Anspruch 1, **dadurch gekennzeichnet, dass** es mit Stoßdämpfungssystemen ausgestattet ist.

## Revendications

1. Véhicule à quatre roues électrique, portatif et repliable ayant un guidon (42) équipé de leviers de commande de frein et d'accélérateur, une selle (44), un réceptacle pour contenir de petits objets (45) et un plateau de support d'accumulateurs électriques (46), dans lequel sa structure portante comprend un châssis à périmètre inférieur et un châssis à périmètre supérieur reliés au moyen d'au moins deux premières barres (1) et deux secondes barres (2) ; lesdits châssis et lesdites première et seconde barres (1, 2) étant constitués de métal ou de fibres spéciales telles que des fibres de carbone ; ledit châssis à périmètre inférieur étant formé par des barres de section reliées les unes aux autres ; ledit châssis à périmètre supérieur étant formé par au moins une première barre latérale (11) et une seconde barre latérale (12) ; chaque barre latérale (11, 12) du châssis à périmètre supérieur est équipée d'au moins un rail ; l'axe longitudinal de chaque rail étant parallèle à l'axe médian longitudinal de la barre latérale (11, 12) ; lesdites premières barres (1) étant situées dans la partie avant du véhicule à quatre roues et lesdites secondes barres (2) étant situées dans la partie arrière ; les extrémités inférieures des premières barres antérieures (1) étant montées pivotantes sur les barres latérales (3, 4) du châssis à périmètre inférieur au moyen de chevilles (13) ; les extrémités supérieures des premières barres antérieures (1) étant montées pivotantes sur les barres latérales (11, 12) du châssis à périmètre supérieur au moyen de chevilles (14) ; une plaque (15) étant fixée sur chaque côté du châssis à périmètre inférieur ; une fente semi-circulaire (15.1) étant placée dans la zone périphérique de chaque plaque (15), chaque fente semi-circulaire (15.1) ayant une extrémité supérieure élargie (15.2) et une extrémité inférieure élargie (15.3) ; les extrémités inférieures des secondes barres arrière (2) étant montées pivotantes sur lesdites plaques (15) au moyen de chevilles (16) ; les extrémités supérieures desdites secondes barres arrière (2) étant montées pivotantes sur lesdites barres latérales (11, 12) du châssis à périmètre supérieur au moyen de chevilles de fermeture (17) ; chaque cheville de fermeture (17) étant logée dans un orifice réalisé dans un bloc (18) ; chaque bloc (18) ayant au moins un renfoncement ou guide se mettant en prise avec un rail d'une barre latérale (11, 12) du châssis à périmètre supérieur ; une seconde cheville (19) étant fixée à la partie moyenne supérieure de chaque seconde barre arrière (2) et une troisième cheville (20) étant fixée à la partie moyenne inférieure de chaque seconde barre arrière (2) ; ladite troisième cheville (20) de chaque seconde barre arrière (2) étant libre de coulisser dans la fente (15.1) de chaque plaque (15) et étant logée dans une de ses extrémités élargies (15.2, 15.3) ; chaque troisième cheville (20) étant équipée d'un levier fixé à un excentrique verrouillant chaque seconde barre arrière (2) à la plaque (15) ; deux troisièmes barres latérales (33) reliant les barres latérales (3, 4) du châssis à périmètre inférieur aux secondes barres arrière (2) ; l'extrémité antérieure de chaque troisième barre latérale (33) étant montée pivotante sur l'extrémité antérieure du châssis à périmètre inférieur ; chaque troisième barre latérale (33) ayant une fente (33.1) se prolongeant le long de l'axe médian longitudinal de la barre latérale (33) elle-même ; chaque troisième barre latérale (33) étant montée pivotante sur chaque seconde barre arrière (2) au moyen de ladite seconde cheville (19) située dans la partie moyenne supérieure de chaque seconde barre arrière (2) elle-même ; chaque seconde cheville (19) de la seconde barre arrière (2) étant logée dans ladite fente (33.1) d'une troisième barre latérale (33) ; un essieu (21) étant relié à la partie antérieure du châssis à périmètre inférieur ; deux moyeux étant fixés aux deux extrémités de l'essieu (21) lui-même et deux roues avant (22) étant montées sur lesdits moyeux ; une jonction (34), reliant les deux moyeux des roues avant (22) à l'essieu (36) du guidon au moyen de tiges de traction (37), est fixée au châssis à périmètre inférieur ; ledit essieu (36) du guidon étant logé dans un manchon (38) monté pivotant sur le châssis à périmètre inférieur au moyen de chevilles (39) ; ledit manchon (38) étant relié aux barres latérales (11, 12) du châssis à périmètre supérieur au moyen de deux crochets semi-cylindriques (43) formant une cavité cylindrique logeant le manchon (38) ; lesdits crochets semi-cylindriques (43) logeant des chevilles fixant le manchon (38) aux barres latérales (11, 12) du châssis à périmètre supérieur lui-même ; une fourchette, constituée de deux barres arrière (23, 24) et d'au moins une barre transversale (25) reliant les barres arrière (23, 24) elles-mêmes, étant montée pivotante sur les extrémités postérieures des barres latérales (3, 4) du châssis à périmètre inférieur ; ladite fourchette étant montée pivotante sur le châssis à périmètre inférieur au moyen de chevilles (26) ; un arbre (27), étant libre de tourner sur la fourchette, étant contraint à proximité des extrémités postérieures des barres arrière (23, 24) de la fourchette elle-même ; deux moyeux, sur lesquels deux roues arrière (28) sont montées, étant fixés aux deux extrémités dudit arbre (27) ; un disque à frein (30), doté d'un étrier de frein attaché, fixé à la fourchette, étant aussi calé sur ledit arbre (27) ; un moteur électrique (31), alimenté par les accumulateurs électriques situés dans le plateau de support des accumulateurs électriques (46), étant installé sur ladite fourchette ; ledit moteur électrique (31) entraînant les roues arrière (28) ; ladite selle (44) et ledit réceptacle servant à contenir de petits objets (45) étant fixés au châssis à périmètre supérieur ; ledit plateau de support des accumulateurs électriques (46) étant soutenu par le châssis à périmètre inférieur ; un espace étant situé entre le châssis à périmètre inférieur et le châssis à périmètre supérieur ; un contenant servant à contenir des objets (47) étant logé à l'intérieur dudit espace ; ledit contenant servant à contenir des objets (47) étant provisoirement fixé au châssis à périmètre inférieur et sur le côté sur des barres latérales (33) par des éléments de retenue qui peuvent être élastiques ou non.

2. Véhicule à quatre roues selon la revendication 1, **caractérisé en ce que** ledit châssis à périmètre inférieur est formé par une première barre latérale (3), une seconde barre latérale (4), une barre arrière (5) et une barre intermédiaire (6) ainsi que d'un petit châssis antérieur.

3. Véhicule à quatre roues selon la revendication 2, **caractérisé en ce que** ledit petit châssis antérieur est fixé au châssis à périmètre inférieur et est formé par une première barre latérale (7), une seconde barre latérale (8), une barre postérieure (9) et une barre antérieure (10).

4. Véhicule à quatre roues selon la revendication 1, **caractérisé en ce que** lesdites barres latérales (11, 12) formant le châssis à périmètre supérieur sont pliées à l'avant de sorte que leurs extrémités peuvent réciproquement se rapprocher.

5. Véhicule à quatre roues selon la revendication 1, **caractérisé en ce que** ledit rail de chaque barre latérale (11, 12) du châssis à périmètre supérieur est une branche cylindrique (11.1).

6. Véhicule à quatre roues selon la revendication 1, **caractérisé en ce que** chacune des deux barres latérales (11, 12) du châssis à périmètre supérieur est équipée d'au moins un renfoncement ou guide dont l'axe longitudinal est parallèle à l'axe médian longitudinal de la barre latérale (11, 12) elle-même.

7. Véhicule à quatre roues selon les revendications 1 et 6, **caractérisé en ce que** chaque bloc (18) est équipé d'au moins un segment de rail coulissant dans le renfoncement ou guide réalisé dans chaque barre latérale (11, 12) du châssis à périmètre supérieur.

8. Véhicule à quatre roues selon la revendication 1, **caractérisé en ce que** des troisièmes barres latérales (33) peuvent relier l'extrémité postérieure du châssis à périmètre inférieur aux premières barres antérieures (1).

9. Véhicule à quatre roues selon les revendications 1 et 2, **caractérisé en ce que** lesdites chevilles (39), faisant pivoter ledit manchon (38) sur le châssis à périmètre inférieur, sont logées dans des orifices réalisés dans des crochets (40) fixés au petit châssis antérieur et dans des crochets (41) fixés à la base du manchon (38).

10. Véhicule à quatre roues selon la revendication 1, **caractérisé en ce que** le mouvement est transmis par le moteur électrique (31) aux roues arrière (28) au moyen d'un élément de transmission de mouvement relié à une roue dentée (29) calée sur ledit arbre (27).

11. Véhicule à quatre roues selon la revendication 1, **caractérisé en ce que** le mouvement est transmis par le moteur électrique (31) aux roues arrière (28) au moyen d'un système d'entraînement mécanique à différentiel.

12. Véhicule à quatre roues selon les revendications 1 et 11, **caractérisé en ce que** ledit système d'entraînement mécanique à différentiel peut transmettre le mouvement de façon indépendante à chaque roue arrière (28) au moyen d'arbres avec des engrenages reliés séparément aux roues arrière (28) elles-mêmes.

13. Véhicule à quatre roues selon la revendication 1, **caractérisé en ce qu'**il utilise deux moteurs (31), chacun étant relié séparément au moyeu d'une roue arrière (28).

14. Véhicule à quatre roues selon la revendication 1, **caractérisé en ce qu'**il est équipé de systèmes d'amortisseurs.
